# EUROPÄISCHE PATENTSCHRIFT

(11) **EP 1 517 818 B1**
(45) Veröffentlichungstag und Bekanntmachung des Hinweises auf die Patenterteilung: **12.08.2009**
(21) Anmeldenummer: 03760548.2
(22) Anmeldetag: 30.01.2003
(51) Int. Cl.: B60S 1/34, B60S 1/32

(54) **BEFESTIGUNGSTEIL FÜR EINEN WISCHERARM EINES FAHRZEUG-SCHEIBENWISCHERS**
FASTENING ELEMENT FOR THE WIPER ARM OF A VEHICLE WINDSHIELD WIPER
PIECE DE FIXATION POUR UN BRAS D'ESSUIE-GLACE DE VEHICULE

(30) Priorität: 21.06.2002 DE 10227819
(43) Veröffentlichungstag der Anmeldung: 30.03.2005
(73) Patentinhaber: ROBERT BOSCH GMBH, 70442 Stuttgart (DE)
(72) Erfinder: RITT, Jean-Marc, F-67000 Strasbourg (FR)
(86) Internationale Anmeldenummer: PCT/DE2003/000252
(87) Internationale Veröffentlichungsnummer: WO 2004/000615

(56) Entgegenhaltungen:
- EP-A- 0 579 550
- EP-A- 0 798 184
- DE-A- 3 312 011
- DE-A- 10 020 004
- DE-A- 19 735 301
- GB-A- 838 419
- GB-A- 2 311 338

## Beschreibung

### Stand der Technik

Die Erfindung geht aus von einem Befestigungsteil für einen Wischerarm eines Fahrzeug-Scheibenwischers nach dem Oberbegriff des Anspruchs 1.

Bekannte Scheibenwischer für Fahrzeugscheiben haben ein Viergelenk-Antriebsgestänge und einen durch das Antriebsgestänge schwenkbaren Wischarm, der an seinem freien Ende das Wischblatt trägt, das durch seine Schwenkbewegung über die Fahrzeugscheibe geführt wird. Das Viergelenk-Antriebsgestänge weist zwei Schwenkhebel, die an einem Hebelende auf einer Achse drehfest sitzen, und das als Koppel wirkende Befestigungsteil auf, das über jeweils ein Gelenk mit parallel zu den Hebelachsen ausgerichteter Gelenkachse die beiden Schwenkhebel an deren achsfernen Enden miteinander koppelt. Eine der Hebelachsen ist mittels eines Wischermotors antreibbar, während die andere Hebelachse in einem Stützlager drehbar aufgenommen ist. Das die Koppel bildende Befestigungsteil ist aus Auliminiumdruckguß hergestellt und trägt an seinem wischerarmseitigen Ende eine Aufnahme für den darin schwenkgelagerten Wischerarm, dessen Schwenkachse etwa rechtwinklig zu den Gelenkachsen und quer zur Längsachse des Befestigungsteils ausgerichtet ist.

Ein bekanntes Befestigungsteil für einen Wischerarm dieser Art (EP 0 798 184 A1) weist ein Blechteil auf, das in einer Schwenkbewegung antreibbar ist und seine Schwenkbewegung auf den Wischerarm überträgt. Das Blechteil besitzt einen ebenen, flachen Rücken und zwei davon rechtwinklig abstehende Seitenwangen. Die Seitenwangen gehen zum wischerarmseitigen Ende hin in nach oben vorspringender Ohren über. In jedem Ohr ist eine von zwei miteinander fluchtenden Bohrungen eingebracht, in denen der Wischerarm schwenkbeweglich gelagert wird. Nahe den Ohren ist das Blechteil mit einer Querversteifung versehen, die die beiden Seitenwangen nahe ihrer Oberkante gegeneinander abstützen. Die Querversteifung besteht aus einer mit einer der Seitenwangen einstückigen Lasche, die von der Seitenwange an deren Oberkante rechtwinklig abgebogen ist und sich mit ihrem freien Stirnende an der anderen Seitenwange nahe deren Oberkante abstützt.

### Vorteile der Erfindung

Das erfindungsgemäße Befestigungsteil für einen Wischerarm eines Fahrzeugs-Scheibenwischers mit den Merkmalen des Anspruchs 1 hat den Vorteil, als Blechteil preisgünstig hergestellt werden zu können- und leichtgewichtig zu sein. Durch den in der Schwenkebene liegenden Rücken des Blechteils wird eine ausreichende Steifigkeit in der Koppelebene des Viergelenk-Antriebsgestänges gewährleistet, die ein Ausknicken des Befestigungsteils auch bei vorübergehender Schwergängigkeit des Wischblatts zuverlässig verhindert. Die Querversteifung sorgt für eine gleich hohe Steifigkeit des Blechteils im Bereich der Wischerarmaufnahme, so dass auch in diesem zur Schwenkebene des Viergelenk-Antriebsgestänges parallel versetzten Kopfbereich des Blechteils auftretende Querkräfte beim Schwenken des Wischblatts zu keinen Verwindungen oder Verbiegungen des Blechteils führen können. Die Realisierung der Querversteifung durch zwei von den Seitenwangen abgewinkelte, untereinander verpresste Laschen ist fertigungstechnisch kostengünstig und benötigt keine zusätzliche Teile.

Durch die in den weiteren Ansprüchen aufgeführten Maßnahmen sind vorteilhafte Weiterbildungen und Verbesserungen des im Anspruch 1 angegebenen Befestigungsteils möglich.

Gemäß einer vorteilhaften Ausführungsform der Erfindung weist die erste Lasche seitliche Ausnehmungen auf, in die die von der zweiten Lasche abgebogenen Krallen eintauchen. Dadurch stellen die Krallen in Querrichtung des Blechteils einen zusätzlichen Formschluß zwischen den beiden Laschen her, so daß eine Relativverschiebung der beiden Laschen zueinander auch durch bei gestörtem Betrieb des Scheibenwischers auftretende, extreme Querkräfte zuverlässig verhindert ist.

Gemäß einer vorteilhaften Ausführungsform der Erfindung sind die einander zugekehrten Begrenzungskanten der Ausnehmungen an jeder Längsseite der zweiten Lasche so geschrägt, daß ihr lichter Abstand voneinander sich zum Grund der Ausnehmungen hin verjüngt. Durch diese leicht schräg mit abnehmender Breite ausgeführten Ausnehmungen kann beim Anpressen der Krallen ein Spiel zwischen den Laschen in Querrichtung des Blechteils ausgeglichen werden.

Gemäß einer vorteilhaften Ausführungsform der Erfindung ist das Blechteil mit Ohren und Laschen aus einer Blechplatte ausgestanzt und zur Ausformung der Seitenwangen tiefgezogen.

### Zeichnung

Die Erfindung ist anhand eines in der Zeichnung dargestellten Ausführungsbeispiels in der nachfolgenden Beschreibung näher erläutert. Es zeigen in perspektivischer Darstellung:
- Fig. 1: ausschnittweise eine Draufsicht eines Scheibenwischers für eine Fahrzeugscheibe mit einem Viergelenk-Antriebsgestänge und einem abschnittweise dargestellten Wischerarm,
- Fig. 2: eine vergrößerte Darstellung des Ausschnitts II in Fig. 1,
- Fig. 3 und 4: jeweils eine vergrößerte Darstellung einer Einzelheit einer Querversteifung im Befestigungsteil des Viergelenk-Antriebsgestänges in Fig. 1 und 2.

### Beschreibung des Ausführungsbeispiels

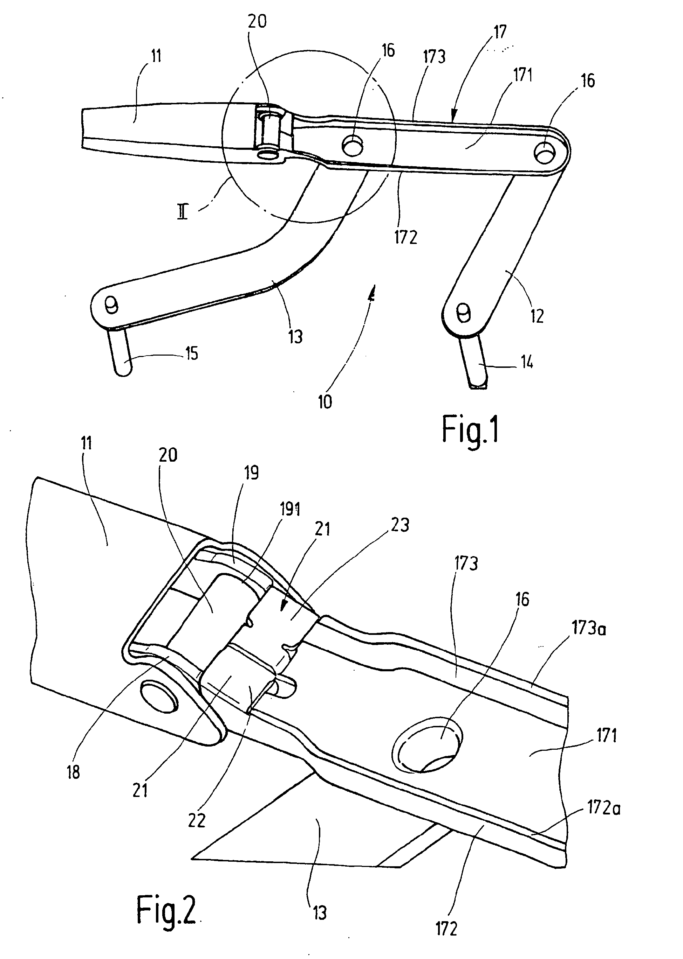

Der in Fig. 1 perspektivisch, ausschnittweise dargestellte Scheibenwischer für eine Fahrzeugscheibe weist ein Viergelenk-Antriebsgestänge 10 und einen von diesem in eine hin- und hergehende Schwenkbewegung angetriebenen Wischerarm 11 auf, der an seinem freien Ende ein hier nicht dargestelltes Wischblatt trägt, das er bei seiner Schwenkbewegung über die Fahrzeugscheibe hinwegführt. Das Viergelenk-Antriebsgestänge 10 umfaßt zwei Schwenkhebel 12 und 13 die jeweils an einem Ende auf einer Achse 14, 15 drehfest sitzen, von denen eine Achse mittels eines Wischermotors in eine Schwenkbewegung versetzt werden kann, während die andere Achse in einem Stützlager drehend aufgenommen ist. An den achsenfernen Enden sind die beiden Schwenkhebel 12, 13 über je ein Gelenk 16, dessen Gelenkachse parallel zu den Achsen 14, 15 ausgerichtet ist, mit einem eine Koppel darstellenden Befestigungsteil verbunden. Das Befestigungsteil ist als Blechteil 17 mit einem in der Schwenkebene der Koppel liegenden, im wesentlichen flachen Rücken 171 und zwei davon etwa rechtwinklig abstehenden Seitenwangen 172 ausgebildet. Die am Rücken 171 einander gegenüberliegenden Seitenwangen 172, 173 gehen am wischerarmaufnahmeseitigen Ende des Blechteils 17 in vorspringende Ohren 18, 19 über und bilden hier den sog. Kopfbereich, in dem der Wischerarm 11 mit zu den Achsen der Gelenke 16 und der Längsachse des Rückens 171 etwa rechtwinklig ausgerichteter Gelenkachse angelenkt ist. Hierzu ist in jedem der Ohren 18, 19 eine Bohrung 181, 191 vorgesehen, durch die ein Gelenkbolzen 20 drehbar hindurchgeführt ist, der seinerseits am Wischerarm 11 festgelegt ist.

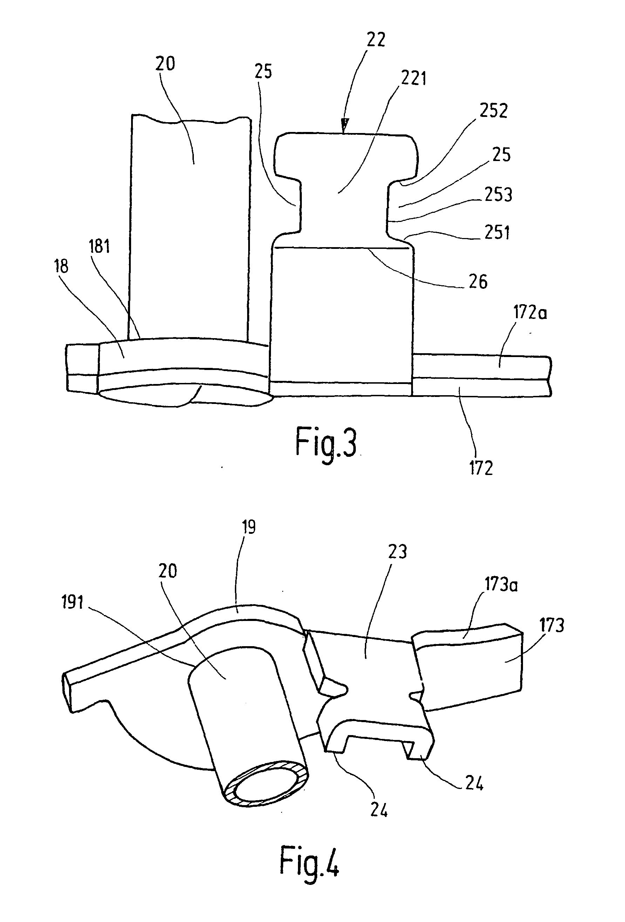

Zur Versteifung des Kopfbereichs des Blechteils 17 ist im Übergangsbereich der Seitenwangen 172, 173 zu den Ohren 18, 19 zwischen den rückenfernen Oberkanten 172a und 173a der Seitenwangen 172, 173 eine die Seitenwangen 172, 173 gegeneinander abstützende Querversteifung 21 vorgesehen. Wie die vergrößerte Darstellung in Fig. 2 zeigt, besteht die Querversteifung 21 aus einer ersten Lasche 22 die an der Oberkante 172a der einen Seitenwange 172 etwa rechtwinklig abgebogen ist und etwa parallel zum Rücken 171 verläuft und aus einer zweiten Lasche 23, die an der Oberkante 173a der anderen Seitenwange 173 bis zur Auflage auf der ersten Lasche 22 abgebogen ist. Die zweite Lasche 23 trägt an ihren beiden Längskanten nach unten abgebogene Krallen 24 (Fig. 4), die an der ersten Lasche 22 seitlich angepreßt sind. Wie Fig. 3 zeigt, weist die erste Lasche 22 seitliche Ausnehmungen 25 auf, in die die Krallen 24 beim Aufbiegen der zweiten Lasche 23 auf die erste Lasche 22 eintauchen. Wie in Fig. 3 zu erkennen ist, sind die einander zugekehrten Begrenzungskanten 251, 252 der Ausnehmungen 25 leicht geschrägt, und zwar so, daß ihr lichter Abstand voneinander zum Grund der Ausnehmung 25 hin abnimmt. Durch diese geschrägten Ausnehmungen 25 können die Krallen 24 beim Anpressen an die erste Lasche 22 mehr oder weniger tief in die Ausnehmungen 25 hineingepreßt werden, so daß ein Spiel in Querrichtung des Blechteils 17 zwischen Krallen 24 und Ausnehmungen 25 ausgeglichen wird. Die erste Lasche 22 erstreckt sich vorzugsweise bis nahe an die Seitenwange 173 und kann noch eine Abkröpfung 26 derart aufweisen, daß ihr die abgebogene zweite Lasche 23 aufnehmender, abgekröpfter Abschnitt 221 tiefer liegt und somit die aufeinanderliegenden beiden Laschen 22, 23 auf der Oberfläche bündig sind.

Das Blechteil 17 ist mit den Ohren 18, 19 und den Laschen 22, 23 mit Krallen 24 und Ausnehmungen 25 aus einer Blechplatte ausgestanzt oder ausgeschnitten und zur Ausformung der Seitenwangen 172, 173, die an dem vom Wischerarm 21 abgekehrten Ende des Blechteils 17 einstückig ineinander übergehen, tiefgezogen.

In Fig. 3 und 4 sind jeweils Einzelheiten der Querversteifung 21 vergrößert dargestellt. Fig. 3 zeigt dabei die erste Seitenwange 172 mit Ohr 18 und erster Lasche 22 sowie den durch die Bohrung 181 geschobenen Gelenkbolzen 20 und Fig. 4 die zweite Seitenwange 173 mit Ohr 19 und zweiter Lasche 23 sowie den durch die Bohrung 191 hindurchgeschobenen Gelenkbolzen 20. Nach Ausstanzen des Blechteils 17 wird mit dem Aufstellen der Ohren 18, 19 auch die erste Lasche 22 soweit umgebogen, daß sie sich etwa parallel zum Rücken 171 des Blechteils 17 erstreckt (Fig. 3). Gleichzeitig wird die Kröpfung 26 hergestellt (Fig. 3). Nunmehr wird die zweite Lasche 23 von der Seitenwange 173 auf die erste Lasche 22 abgebogen, bis die seitlichen Krallen 24 in die Ausnehmungen 25 in der ersten Lasche 22 eintauchen (Fig. 4). Liegt die zweite Lasche 23 auf dem abgekröpften Abschnitt 221 der ersten Lasche 22 auf, so werden die Krallen 24 durch seitliche Pressung in die Ausnehmungen 25 hineingedrückt und dabei an die Begrenzungskanten 251 und 252 der Ausnehmungen 25 angepreßt (Fig. 2).

## Patentansprüche

1. Befestigungsteil für einen Wischerarm (11) eines Fahrzeug-Scheibenwischers, mit einem zur Schwenkbewegung antreibbaren und mit dem Wischerarm (11) koppelbaren Blechteil (17), das einen in der Schwenkebene liegenden, flachen Rücken (171) und zwei davon rechtwinklig abstehende Seitenwangen (172, 173) aufweist, die am wischerarmaufnahmeseitigen Ende des Blechteils (17) in nach oben vorspringende, eine Aufnahme zur gelenkigen Anbindung des Wischerarms (21) tragende Ohren (18, 19) übergehen, und mit einer am Blechteil (17) ausgebildeten Querverstreifung (21), die die rückenfernen Oberkanten (172a, 173a) der Seitenwangen (172, 173) im Übergangsbereich zu den Ohren (18,19) gegeneinander abstützt, die Querversteifung (21) eine erste Lasche (22), die an der Oberkante (172) einer Seitenwange (172) etwa parallel zum Rücken (171) abgebogen ist, und eine zweite Lasche (23) umfasst, die an der Oberkante (173a) der anderen Seitenwange (173) abgebogen ist, **dadurch gekennzeichnet, dass** die zweite Lasche (23) bis zur Auflage auf der ersten Lasche (22) abgebogen ist und dass die zweite Lasche (23) von ihren beiden Längskanten abgebogene Krallen (24) aufweist, die an die erste Lasche (22) angepresst sind.

2. Befestigungsteil nach Anspruch 1, **dadurch gekennzeichnet, dass** die erste Lasche (22) seitliche Ausnehmungen (25) aufweist, in die die an der zweiten Lasche (23) abgebogenen Krallen (24) eintauchen.

3. Befestigungsteil nach Anspruch 2, **dadurch gekennzeichnet, dass** die einander zugekehrten Begrenzungskanten (251, 252) der Ausnehmungen (25) so geschrägt sind, dass ihr Abstand voneinander zum Grund (253) der Ausnehmung (25) hin abnimmt.

4. Befestigungsteil nach einem der Ansprüche 1 bis 3, **dadurch gekennzeichnet, dass** die erste Lasche (22) sich bis nahe an die gegenüberliegende Seitenwange (173) erstreckt.

5. Befestigungsteil nach einem der Ansprüche 1 bis 4, **dadurch gekennzeichnet, dass** die mit dem Rücken (171) einstückigen Seitenwangen (172, 173) an dem von dem wischerarmaufnahmeseitigen Ende abgekehrten Ende des Blechteils (17) einstückig ineinander übergehen.

6. Befestigungsteil nach Anspruch 5, **dadurch gekennzeichnet, dass** das Blechteil (17) mit Ohren (18, 19), Laschen (22, 23) Ausnehmungen (25) und Krallen (24) aus einer Blechplatine ausgestanzt und zur Ausformung der Seitenwangen (172,173) tiefgezogen ist.

7. Befestigungsteil nach einem der Ansprüche 1 bis 6, **dadurch gekennzeichnet, dass** die Aufnahme in den Ohren (18, 19) eingebrachte, miteinander fluchtende Bohrungen (181, 191) zum Durchschieben eines im Wischerarm (21) festgelegten Gelenkbolzens (20) umfasst.

## Claims

1. Fastening element for a wiper arm (11) of a vehicle windscreen wiper, with a sheet-metal part (17) which can be driven to produce the pivoting movement, can be coupled to the wiper arm (11) and has a flat back (171) located in the pivoting plane and two side cheeks (172, 173) which protrude at right angles therefrom and merge at that end of the sheet-metal part (17) which is on the wiper-arm-receiving side into upwardly projecting lugs (18, 19) which bear a receptacle for the articulated connection of the wiper arm (21), and with a transverse stiffening portion (21) which is formed on the sheet-metal part (17) and supports the back-remote upper edges (172a, 173a) of the side cheeks (172, 173) against each other in the transition region to the lugs (18, 19), said transverse stiffening portion (21) comprising a first tab (22) which is bent over on the upper edge (172) of a side cheek (172) such that it is approximately parallel to the back (171), and a second tab (23) which is bent over on the upper edge (173a) of the other side cheek (173), **characterized in that** the second tab (23) is bent over until it rests on the first tab (22), and **in that** the second tab (23) has claws (24) which are bent over from the two longitudinal edges thereof and are pressed against the first tab (22).

2. Fastening element according to Claim 1, **characterized in that** the first tab (22) has lateral recesses (25) into which the claws (24) bent over on the second tab (23) dip.

3. Fastening element according to Claim 2, **characterized in that** the mutually facing boundary edges (251, 252) of the recesses (25) are bevelled in such a manner that the distance thereof from each other decreases towards the base (253) of the recess (25).

4. Fastening element according to one of Claims 1 to 3, **characterized in that** the first tab (22) extends almost as far as the opposite side cheek (173).

5. Fastening element according to one of Claims 1 to 4, **characterized in that** the side cheeks (172, 173) which are integral with the back (171) merge integrally into each other at that end of the sheet-metal part (17) which is remote from the end on the wiper-arm-receiving side.

6. Fastening element according to Claim 5, **characterized in that** the sheet-metal part (17) together with lugs (18, 19), tabs (22, 23), recesses (25) and claws (24) is punched out of a sheet-metal billet and deep-drawn in order to form the side cheeks (172, 173).

7. Fastening element according to one of Claims 1 to 6, **characterized in that** the receptacle comprises mutually aligned holes (181, 191) placed in the lugs (18, 19) for the pushing-through of a hinge pin (20) fixed in the wiper arm (21).

## Revendications

1. Pièce de fixation pour un bras d'essuie-glace (11) d'un essuie-glace de véhicule, comprenant une partie en tôle (17) pouvant être entraînée en un mouvement de pivotement et pouvant être accouplée au bras d'essuie-glace (11), laquelle présente un dos (171) plat situé dans le plan de pivotement et deux parois latérales (172, 173) saillant depuis celui-ci à angle droit, lesquelles se prolongent, à l'extrémité de la partie en tôle (17) du côté recevant le bras d'essuie-glace, dans des oreilles (18, 19) saillant vers le haut, portant un logement pour la liaison articulée du bras d'essuie-glace (21), et comprenant un renforcement transversal (21) réalisé sur la partie en tôle (17), qui supporte l'une contre l'autre les arêtes supérieures (172a, 173a) des parois latérales (172, 173), éloignées du dos, dans la région de transition aux oreilles (18, 19), le renforcement transversal (21) présentant une première patte (22) qui est recourbée au niveau de l'arête supérieure (172a) d'une paroi latérale (172) approximativement parallèlement au dos (171), et une deuxième patte (23), qui est recourbée au niveau de l'arête supérieure (173a) de l'autre paroi latérale (173), **caractérisée en ce que** la deuxième patte (23) est recourbée jusqu'à venir en appui sur la première patte (22), et **en ce que** la deuxième patte (23) présente des griffes (24) recourbées depuis leurs deux arêtes longitudinales, qui sont pressées contre la première patte (22).

2. Pièce de fixation selon la revendication 1, **caractérisée en ce que** la première patte (22) présente des évidements latéraux (25) dans lesquels pénètrent les griffes (24) recourbées au niveau de la deuxième patte (23).

3. Pièce de fixation selon la revendication 2, **caractérisée en ce que** les arêtes de limitation tournées l'une vers l'autre (251, 252) des évidements (25) sont biseautées de telle sorte que leur espacement mutuel diminue vers la base (253) de l'évidement (25).

4. Pièce de fixation selon l'une quelconque des revendications 1 à 3, **caractérisée en ce que** la première patte (22) s'étend jusqu'à proximité de la parois latérale opposée (173).

5. Pièce de fixation selon l'une quelconque des revendications 1 à 4, **caractérisée en ce que** les parois latérales (172, 173) réalisées d'une seule pièce avec le dos (171) se prolongent d'une seule pièce l'une dans l'autre au niveau de l'extrémité de la partie en tôle (17) opposée à l'extrémité du côté du recevant le bras d'essuie-glace.

6. Pièce de fixation selon la revendication 5, **caractérisée en ce que** la partie en tôle (17) est estampée avec les oreilles (18, 19), les pattes (22, 23), les évidements (25) et les griffes (24) dans une plaque de tôle et est emboutie profond pour former les parois latérales (172, 173).

7. Pièce de fixation selon l'une quelconque des revendications 1 à 6, **caractérisée en ce que** le logement comprend des alésages (181, 191) en affleurement l'un avec l'autre, pratiqués dans les oreilles (18, 19), pour faire passer un boulon d'articulation (20) fixé dans le bras d'essuie-glace (21).
